# EUROPÄISCHE PATENTSCHRIFT

(11) **EP 2 134 568 B1**
(45) Veröffentlichungstag und Bekanntmachung des Hinweises auf die Patenterteilung: **29.02.2012**
(21) Anmeldenummer: 08715717.8
(22) Anmeldetag: 09.02.2008
(51) Int. Cl.: B60N 2/58, B60N 2/44

(54) **BEFESTIGUNGSSYSTEM ZUM FESTLEGEN VON BEZUGSMATERIALIEN**
FIXING SYSTEM FOR FIXING COVERING MATERIAL
SYSTEME DE FIXATION POUR FIXER DES MATERIAUX DE REVETEMENT

(30) Priorität: 17.03.2007 DE 102007012879
(43) Veröffentlichungstag der Anmeldung: 23.12.2009
(73) Patentinhaber: Gottlieb Binder GmbH & Co. KG, 71088 Holzgerlingen (DE)
(72) Erfinder: POULAKIS, Konstantinos, 71157 Hildrizhausen (DE)
(74) Vertreter: Bartels, Martin Erich Arthur
(86) Internationale Anmeldenummer: PCT/EP2008/001000
(87) Internationale Veröffentlichungsnummer: WO 2008/113433

(56) Entgegenhaltungen:
- DE-A1- 10 303 358
- JP-A- 2007 210 211

## Beschreibung

Die Erfindung betrifft ein Befestigungssystem zum Festlegen von Bezugsmaterialien an einem Polsterschaumteil eines Sitzes, insbesondere Fahrzeug- oder Fluggastsitzes, mit mindestens einem als Profilkörper ausgebildeten, in das Polsterschaumteil einschäumbaren Verankerungsteil und einem mit dem Bezugsmaterial verbindbaren, insbesondere als Annähfahne dienenden Verbindungsteil, das am Verankerungsteil entlang eines Verbindungsbereiches festgelegt ist, der in Profillängsrichtung des Verankerungsteiles mittig zwischen Profilseitenteilen verläuft, die sich, zueinander entgegengesetzt, zu beiden Seiten des Verbindungsbereiches erstrecken.

Befestigungssysteme dieser Art sind bekannt, siehe DE 103 03 358 A1, welches alle Merkmale des Oberbegriffs des Anspruchs 1 offenbart. Bei der Herstellung eines derartigen Befestigungssystemes wird der Profilkörper aus einem extrudierbaren Kunststoffmaterial als einstückiges Monoextrudat stranggepreßt, wobei ein im wesentlichen massiver, leistenartiger Körper gebildet wird, den man in der Fachsprache üblicherweise auch mit "Kederprofil" bezeichnet. Zur Bildung des Verbindungsbereiches für das Festlegen des üblicherweise als Annähfahne dienenden Verbindungsteiles ist die Rückseite des Profilkörpers, d.h. die dem Bezugsmaterial zugewandte Seite, mit einer schlitzartigen, in Profillängsrichtung verlaufenden Aufnahmeöffnung versehen, in der das in der Art eines Verbindungsbandes ausgebildete Verbindungsteil (Annähfahne) befestigt wird.

Bei der Herstellung derartiger Systeme treten sowohl in Zusammenhang mit dem eigentlichen Strangpressen des Profilkörpers als auch dem Einbetten der Annähfahne in den Aufnahmeschlitz Schwierigkeiten auf. Was das Einbetten der Annähfahne anbelangt, haben sich anstelle der früher üblichen Schweiß- oder Klebstoffverbindungen Eingieß- oder Intrusionsverfahren als günstiger erwiesen, bei denen zwischen dem Kunststoffmaterial des Profilkörpers und dem Kunststoffmaterial der Annähfahne durch eine gegenseitige, formschlüssige Einbettung der Materialien eine hochfeste Verbindung gebildet wird. Grundvoraussetzung hierfür ist jedoch, dass sowohl der Extrusionsvorgang des Profilkörpers als auch das Einbetten der Annähfahne thermisch äußerst präzise gesteuert werden. Wie sich gezeigt hat, bereitet es jedoch Schwierigkeiten, die Materialtemperaturen über den gesamten Querschnittsbereich über für das Verfahren wesentliche Zeiträume auf dem Sollwert zu halten, weil sich in unterschiedlichen Bereichen stark unterschiedliche Abkühlungsraten ergeben.

Unterschiedliche Abkühlungsraten sind nicht nur hinsichtlich des Einbettens der Annähfahne nachteilig, sondern auch für den eigentlichen Extrusionsvorgang des Profilkörpers störend und daher auch nachteilig, wenn das Einbetten der Annähfahne nicht durch ein Intrusionsverfahren, sondern in üblicher Weise durch Schweiß- oder Klebstoffverbindung erfolgt.

Der Erfindung liegt die Aufgabe zugrunde, ein Befestigungssystem zur Verfügung zu stellen, bei dessen Herstellung die oben erwähnten Schwierigkeiten vermieden sind.

Erfindungsgemäße ist diese Aufgabe durch ein Befestigungssystem gelöst, das die Merkmale des Patentanspruches 1 in seiner Gesamtheit aufweist.

Demgemäß besteht eine wesentliche Besonderheit der Erfindung darin, dass der Profilkörper so gestaltet ist, dass in beiden Profilseitenteilen zumindest je ein in Längsrichtung verlaufender, die Profilquerschnittsfläche verringernder, profilaußenseitig offener Kanal ausgebildet ist. Anders als bei einem massiv ausgebildeten Profilkörper läßt sich durch entsprechende Dimensionierung und Lageanordnung der Kanäle die Profildicke, insbesondere in dem an den Aufnahmeschlitz angrenzenden Bereich, gezielt so verringern, dass sich im Zuge des Strangpressens und des Einbettens der Annähfahne die gewünschten, gleichförmigen Abkühlungsraten ergeben.

Vorzugsweise sind die Querschnitte der Profilseitenteile spiegelbildlich gleich, d.h. in beiden Profilseitenteilen befinden sich zueinander gleich geformte Kanäle, symmetrisch zur Achse des Aufnahmeschlitzes.

Weiterhin kann die Anordnung in vorteilhafter Weise so getroffen sein, dass jedes Profilseitenteil eine Haupt-Verankerungsfläche aufweist, die sich vom Verbindungsbereich ausgehend quer zur Richtung der über die Annähfahne übertragbaren Zugkraft erstrecken und deren äußeren Enden die größte Profilbreite definieren.

Als besonders günstig hat sich hierbei eine Profilform erwiesen, bei der die Haupt-Verankerungsflächen je eine geringfügige, achsparallele konkave Wölbung besitzen.

Vorzugsweise ist jedes Profilseitenteil durch je einen Kanal in jeweils zwei Profilseitenarme geteilt.

Bei einer hinsichtlich des Strangpressens und des Einbettens günstigen Profilform sind die Kanäle zwischen Kanalgrund und außenseitiger Kanalmündung derart schräg verlaufend, dass der Kanalgrund der Haupt-Verankerungsfläche und dem Verbindungsbereich nächstgelegen ist, während die Kanalmündung einen größeren Abstand von der Haupt-Verankerungsfläche aufweist.

Hierbei kann die Anordnung so getroffen sein, dass die Kanäle je eine ebene Kanalseitenfläche und eine konvex gewölbte Kanalseitenfläche aufweisen, wobei die gewölbte Kanalseitenfläche der Haupt-Verankerungsfläche benachbart ist.

Ein besonders gutes Verankerungsverhalten ergibt sich, wenn die Profilseitenarme an den Kanalmündungsrändern jeweils eine im Querschnitt kreisbogenartig gerundete, vorspringende, in Profillängsrichtung verlaufende Verankerungsrippe bilden.

Die Erfindung eröffnet die besonders vorteilhafte Möglichkeit, in zumindest einem Kanal eine Leitung für strömungsfähige Medien vorzusehen oder einen oder mehrere Kanäle als Führung für zumindest einen elektrischen Leiter vorzusehen. Derartige Ausführungsbeispiele eignen sich insbesondere für Sitzsysteme, in deren Polsterteile Kühl- oder Heizsysteme integriert sind oder in denen elektrische Leitungen für Kommunikations-, Steuerungs- oder Antriebssysteme zu verlegen sind.

Sofern in der Beschreibung und in den Patentansprüchen die Bezeichnung "Annähfahne" verwendet wird, um das Verbindungsteil zwischen Polsterbezugsmaterial und Polsterschaumteil zu beschreiben, wird es nicht als zwingend angesehen, dass das Bezugsmaterial, beispielsweise in Form eines Polsterbezugstoffes eines Fahrzeugsitzes, mit der Annähfahne vernäht wird, sondern vielmehr kann die betreffende Verbindung auch über Klebstoffe, thermisches Schweißen oder dergleichen erzeugt werden.

Nachstehend ist die Erfindung anhand der Zeichnung im Einzelnen erläutert. Es zeigen:
- Fig. 1 eine gegenüber einer praktischen Ausführungsform in etwa 1 ½-fach vergrößert gezeichnete perspektivische Schrägansicht eines Ausführungsbeispieles des erfindungsgemäßen Befestigungssystemes;
- Fig. 2 einen gegenüber Fig. 1 vergrößert dargestellten Querschnitt des Ausführungsbeispieles und
- Fig. 3 die in Fig. 2 gezeigte Schnittdarstellung, eingeschäumt in ein schematisiert angedeutetes Polsterschaumteil eines Sitzes, wobei Kanäle in dem als Verankerungsteil dienenden Profilkörper als Führungen für Leitungen für strömungsfähige Medien sowie für elektrische Leiter benutzt sind.

In den Figuren sind ein als Verankerungsteil dienender Profilkörper mit 1 und eine an diesem festgelegte, als Verbindungsteil dienende Annähfahne mit 3 bezeichnet. Der Profilkörper 1 ist als Monoextrudat aus einem weichen Polyvenylchlorid-Werkstoff (PVC) oder aus einem Polypropylen-BlockCopolymer stranggepreßt. Die Annähfahne 3 besteht aus einem non-woven-Material, beispielsweise aus einem Polyester oder aus einem offenporigen Netzsystem, wie einem Gewirke oder Gewebe. Bei derartigen Materialien besteht die Möglichkeit, eine hochfeste Verbindung zwischen Profilkörper 1 und Annähfahne 3 durch thermische Intrusion zu realisieren, indem plastifiziertes Kunststoffmaterial des Profilkörpers in Strukturräume, wie der Gitterstruktur einer Annähfahne, eindringt und bei Erkalten verfestigt, so dass eine formschlüssige Verbindung gebildet ist. Zu diesem Zweck ist im Profilkörper 1 ein Aufnahmeschlitz 5 für den Endrand der Annähfahne 3 ausgebildet, wobei der Schlitz 5, im Profilkörper 1 mittig gelegen, einen in Profillängsrichtung verlaufenden Verbindungsbereich 7 definiert.

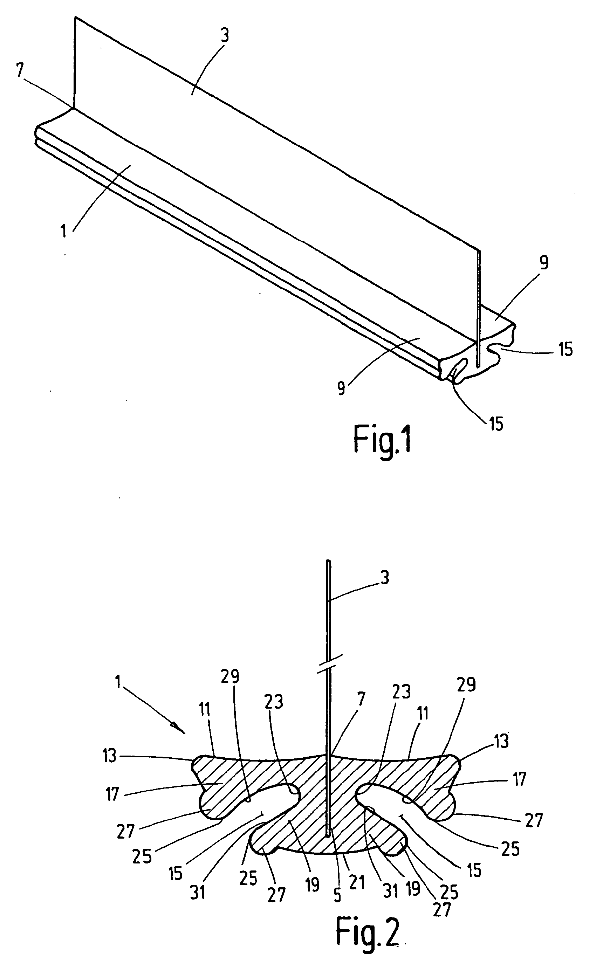

Der Profilkörper 1 ist zur Achse des Aufnahmeschlitzes 5 symmetrisch gestaltet, so dass zwei spiegelbildlich gleich geformte Profilseitenteile 9 (Fig. 1) gebildet sind. An der Profilrückseite, von der sich die Annähfahne 3 weg erstreckt, bilden beide Profilseitenteile 9 je eine Haupt-Verankerungsfläche 11, die beim gezeigten Beispiel nicht völlig eben ist, sondern eine geringfügig achsparallel verlaufende konkave Wölbung besitzt. Die äußeren, bogenförmig gerundeten Endränder 13 der Haupt-Verankerungsflächen 11 definieren die größte Profilbreite des Profilkörpers 1.

In jedem der Profilseitenteile 9 ist ein Kanal 15 so ausgebildet, dass jedes Profilseitenteil 9 in einen der Haupt-Verankerungsfläche 11 benachbarten Profilarm 17 und einen Profilarm 19 unterteilt ist. Die Kanäle 15 weisen eine Kanalbreite auf, die etwa einem Drittel der Profilhöhe des Profilkörpers 1 zwischen den Haupt-Verankerungsflächen 11 und der dazu entgegengesetzten Profilendfläche 21 beträgt. Während die Verankerungs-Hauptflächen 11 leicht konkav gewölbt sind, weist die Profilendfläche 21 eine geringfügige konvexe Wölbung auf.

Die Kanäle 15 sind so orientiert, dass der Kanalgrund 23 den Haupt-Verankerungsflächen 11 und dem Verbindungsbereich 7 nächstgelegen ist, während die Kanalmündungsränder 25 schräg nach außen und gegen die Endfläche 21 hin nach unten versetzt sind. An sämtlichen Mündungsrändem 25 befindet sich je eine im Querschnitt kreisbogenartige gerundete, vorspringende, in Profillängsrichtung verlaufende Verankerungsrippe 27.

Von den Kanalseitenwänden ist die der Haupt-Verankerungsfläche 11 benachbarte Seitenwand 29 konkav gewölbt, während die andere Seitenwand 31 eben ist. Die durch die Endränder 13 der Haupt-Verankerungsflächen 11 definierte Profilbreite des Profilkörpers 1 beträgt bei dem gezeigten Beispiel etwas mehr als das Doppelte der Profilhöhe zwischen Profilendfläche 21 und den Verankerungs-Hauptflächen 11.

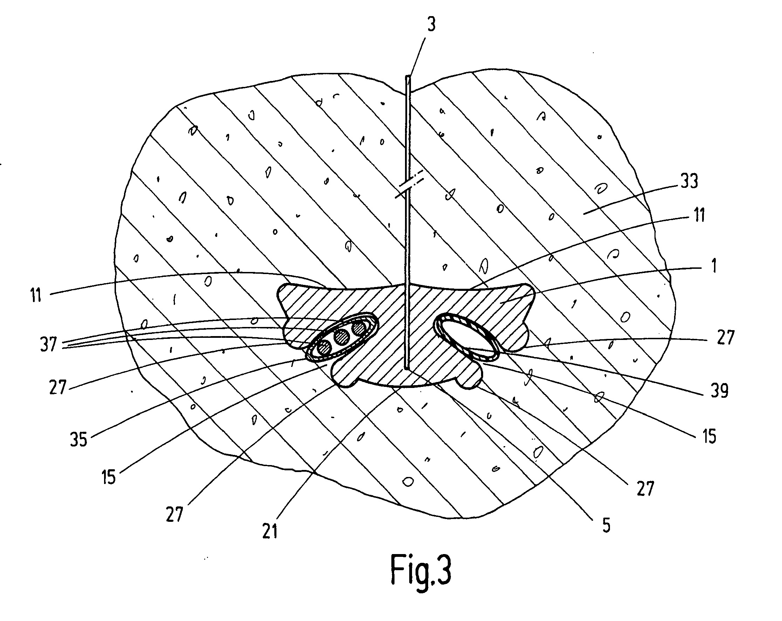

Die Fig. 3, in der wegen der Übereinstimmung mit Fig. 2 nicht sämtliche Einzelheiten beziffert sind, zeigt das Ausführungsbeispiel eingebettet in ein Polsterschaumteil 33 eines nicht gezeigten Sitzes. Bei dem Polsterschaumteil 33 kann es sich um ein für derartige Anwendungen übliches Schaummaterial (PU-Schaumwerkstoff) handeln. Die Fig. 3 verdeutlicht, dass der in der Zeichnung linksseitig gelegene Kanal 15 als Führung für in einer schaumdichten Umhüllung 35 befindliche elektrische Leiter 37 genutzt ist, die Teil eines in das Sitzsystem integrierten elektrischen Systemes sind. Der in der Fig. 3 rechtsseitig gelegene Kanal 15 ist als Führung für eine schlauchartige Rohrleitung 39 genutzt, die Bestandteil eines in das Sitzsystem integrierten Heiz- oder Kühlsystemes sein kann oder als Druckluftleitung für pneumatische Stelleinrichtungen im Sitzsystem dienen kann.

## Patentansprüche

1. Befestigungssystem zum Festlegen von Bezugsmaterialien an einem Polsterschaumteil (33) eines Sitzes, insbesondere Fahrzeug- oder Fluggastsitzes, mit mindestens einem als Profilkörper (1) ausgebildeten, in das Polsterschaumteil (33) einschäumbaren Verankerungsteil und einem mit dem Bezugsmaterial verbindbaren, insbesondere als Annähfahne (3) dienenden Verbindungsteil, das am Verankerungsteil entlang eines Verbindungsbereiches (7) festgelegt ist, der in Profillängsrichtung des Verankerungsteiles mittig zwischen Profilseitenteilen (9) verläuft, die sich, zueinander entgegengesetzt, zu beiden Seiten des Verbindungsbereiches (7) erstrecken, **dadurch gekennzeichnet, dass** in beiden Profilseitenteilen (9) zumindest je ein in Längsrichtung verlaufender, die Profilquerschnittsfläche verringernder, profilaußenseitig offener Kanal (15) ausgebildet ist.

2. Befestigungssystem nach Anspruch 1, **dadurch gekennzeichnet, dass** die Querschnitte der Profilseitenteile (9) spiegelbildlich-gleich sind.

3. Befestigungssystem nach Anspruch 2, **dadurch gekennzeichnet, dass** jedes Profilseitenteil (9) eine Haupt-Verankerungsfläche (11) aufweist, die sich vom Verbindungsbereich (7) ausgehend quer zur Richtung der über die Annähfahne (3) übetragbaren Zugkraft erstrecken und deren äußeren Enden (13) die größte Profilbreite definieren.

4. Befestigungssystem nach Anspruch 3, **dadurch gekennzeichnet, dass** die Haupt-Verankerungsflächen (11) je eine geringfügige, achsparallele konkave Wölbung besitzen.

5. Befestigungssystem nach einem der Ansprüche 1 bis 4, **dadurch gekennzeichnet, dass** jedes Profilseitenteil (9) durch je einen Kanal (15) in jeweils zwei Profilseitenarme (17, 19) geteilt ist.

6. Befestigungssystem nach Anspruch 5, **dadurch gekennzeichnet, dass** die Kanäle (15) zwischen Kanalgrund (23) und außenseitiger Kanalmündung derart schräg verlaufen, dass der Kanalgrund (23) der Haupt-Verankerungsfläche (11) und dem Verbindungsbereich (7) nächstgelegen ist und die Kanalmündung einen größeren Abstand von der Haupt-Verankerungsfläche (11) aufweist.

7. Befestigungssystem nach Anspruch 6, **dadurch gekennzeichnet, dass** die Kanäle (15) je eine ebene Kanalseitenfläche (31) und eine konvex gewölbte Kanalseitenfläche (29) aufweisen und dass die gewölbte Kanalseitenfläche (29) der Haupt-Verankerungsfläche (11) benachbart ist.

8. Befestigungssystem nach einem der Ansprüche 5 bis 7, **dadurch gekennzeichnet, dass** die Profilseitenarme (17, 19) an den Kanalmündungsrändern (25) jeweils eine im Querschnitt kreisbogenartig gerundete, vorspringende, in Profillängsrichtung verlaufende Verankerungsrippe (27) bilden.

9. Befestigungssystem nach Anspruch 8, **dadurch gekennzeichnet, dass** der Abstand zwischen den an die ebene Kanalseitenfläche (31) angrenzenden Verankerungsrippen (27) in etwa der halben Gesamtprofilbreite entspricht.

10. Befestigungssystem nach einem der Ansprüche 1 bis 9, **dadurch gekennzeichnet, dass** in zumindest einem Kanal (15) eine Leitung (39) für strömungsfähige Medien vorgesehen ist.

11. Befestigungssystem nach Anspruch 10, **dadurch gekennzeichnet, dass** eine durch ein Kühlmittel oder ein Wärmemedium durchströmbare Leitung (39) vorgesehen ist.

12. Befestigungssystem nach einem der Ansprüche 1 bis 9, **dadurch gekennzeichnet, dass** zumindest ein Kanal (15) eine Führung für zumindest einen elektrischen Leiter (37) bildet.

## Claims

1. A fixing system for fixing covering materials to a foam upholstery part (33) of a seat, in particular a vehicle or aircraft passenger seat, having at least one anchoring part in the form of a profiled body (1) and which can be foamed into the foam upholstery part (33) and a connecting part which can be joined to the covering material, which is used in particular as a sew-on tag (3), and which is fixed on the anchoring part along a connecting region (7) which runs in the longitudinal direction of the profile of the anchoring part in the middle between profile side parts (9) which extend opposite one another to both sides of the connecting region (7), **characterised in that** in both profile side parts (9) at least one channel (15) is formed which is open to the outside of the profile, which reduces the profile cross-sectional area, and which runs in the longitudinal direction.

2. The fixing system according to Claim 1, **characterised in that** the cross-sections of the profile side parts (9) are identical in mirror image.

3. The fixing system according to Claim 2, **characterised in that** each profile side part (9) has a main anchoring surface (11) which extends proceeding from the connecting region (7) transversely to the direction of the tensile force which can be transferred by means of the sew-on tag (3) and the outer ends (13) of which define the greatest profile width.

4. The fixing system according to Claim 3, **characterised in that** the main anchoring surfaces (11) each have a slight, axially parallel concave arch.

5. The fixing system according to any of Claims 1 to 4, **characterised in that** each profile side part (9) is divided into two profile side arms (17, 19) respectively by each channel (15).

6. The fixing system according to Claim 5, **characterised in that** the channels (15) between the channel base (23) and the outside channel mouth run obliquely such that the channel base (23) is nearest the main anchoring surface (11) and the connecting region (7), and the channel mouth is a greater distance away from the main anchoring surface (11).

7. The fixing system according to Claim 6, **characterised in that** the channels (15) each have a flat channel side surface (31) and a convexly arched channel side surface (29) and that the arched channel side surface (29) is adjacent to the main anchoring surface (11).

8. The fixing system according to any of Claims 5 to 7, **characterised in that** the profile side arms (17, 19) on the edges (25) of the channel mouth respectively form a projecting anchoring rib (27) which runs in the longitudinal direction of the profile and which is rounded in cross-section in the manner of a circular arc.

9. The fixing system according to Claim 8, **characterised in that** the distance between the anchoring ribs (27) which border the flat channel side surface (31) corresponds approximately to half the total profile width.

10. The fixing system according to any of Claims 1 to 9, **characterised in that** there is a line (39) for flowable media in at least one channel (15).

11. The fixing system according to Claim 10, **characterised in that** there is a line (39) through which a coolant or heating medium can flow.

12. The fixing system according to any of Claims 1 to 9, **characterised in that** at least one channel (15) forms a guide for at least one electrical conductor (37).

## Revendications

1. Système de fixation pour la fixation de matériaux de revêtement sur une partie (3) de rembourrage en mousse d'un siège, notamment d'un siège de passager de véhicule automobile ou d'avion, comprenant au moins une partie d'arrimage, constituée sous la forme d'une pièce (1) profilée et pouvant être introduite par moussage dans la partie (3) de rembourrage en mousse, et une partie de liaison pouvant être reliée au matériau de revêtement et servant notamment de lamelle (3) d'approche, qui est fixée à la partie d'arrimage le long d'une zone (7) de liaison, qui s'étend dans la direction longitudinale du profilé de la partie d'arrimage au milieu entre des parties (9) latérales du profilé, lesquelles s'étendent, en étant opposées l'une à l'autre, des deux côtés de la zone (7) de liaison, **caractérisé en ce que**, dans les deux parties (9) latérales du profilé est formé au moins respectivement un canal (15) ouvert du côté extérieur du profilé, s'étendant dans la direction longitudinale et diminuant la surface de section transversale du profilé.

2. Système de fixation suivant la revendication 1, **caractérisé en ce que** les section transversales des parties (9) latérales du profilé sont identiques comme en un miroir.

3. Système de fixation suivant la revendication 2, **caractérisé en ce que** chaque partie (9) latérale du profilé a une surface (11) principale d'arrimage, qui, en partant de la zone (7) de liaison, s'étend transversalement à la direction de la force de traction pouvant être transmise par la lamelle (3) d'approche et dont les extrémités (13) extérieures définissent la largeur la plus grande du profilé.

4. Système de fixation suivant la revendication 3, **caractérisé en ce que** les surfaces (11) principales d'arrimage ont respectivement une légère courbure concave parallèle à l'axe.

5. Système de fixation suivant l'une des revendications 1 à 4, **caractérisé en ce que** chaque partie (9) latérale du profilé est subdivisée par respectivement un canal (15) en respectivement deux bras (17, 19) latéraux du profilé.

6. Système de fixation suivant la revendication 5, **caractérisé en ce que** les canaux (15) s'étendent de manière inclinée entre le fond (23) du canal et une embouchure du canal du côté extérieur, de manière à ce que le fond (23) du canal soit plus près de la surface (11) principale d'arrimage et de la zone (7) de liaison et de manière à ce que l'embouchure du canal soit à une distance plus grande de la surface (11) principale d'arrimage.

7. Système de fixation suivant la revendication 6, **caractérisé en ce que** les canaux (15) ont respectivement une surface (31) latérale de canal plane et une surface (29) latérale de canal de courbure convexe et **en ce que** la surface (29) latérale de canal courbée est voisine de la surface (11) principale d'arrimage.

8. Système de fixation suivant l'une des revendications 5 à 7, **caractérisé en ce que** les bras (17, 19) latéraux du profilé forment sur les bords (29) d'embouchure du canal respectivement une nervure (27) d'arrimage arrondie en arc de cercle en section transversale, en saillie et s'étendant dans la direction longitudinale du profilé.

9. Système de fixation suivant la revendication 8, **caractérisé en ce que** la distance entre les nervures (27) d'arrimage voisines de la surface (31) latérale plane du canal correspondent à peu près à la demi-largeur globale du profilé.

10. Système de fixation suivant l'une des revendications 1 à 9, **caractérisé en ce qu'**il est prévu une conduite (39) pour des milieux susceptibles de s'écouler dans au moins un canal (15).

11. Système de fixation suivant la revendication 10, **caractérisé en ce qu'**il est prévu une conduite (39), dans laquelle peut passer un fluide de refroidissement ou un milieu de chauffage.

12. Système de fixation suivant l'une des revendications 1 à 9, **caractérisé en ce qu'**au moins un canal (15) forme un guidage pour au moins un conducteur (37) électrique.
